# EUROPEAN PATENT SPECIFICATION

(11) **EP 0 714 940 B1**
(45) Date of publication and mention of the grant of the patent: **01.09.1999**
(21) Application number: 95921144.2
(22) Date of filing: 09.06.1995
(51) Int. Cl.: C08L 23/26, C08L 23/16, C08L 21/00, C08L 51/06, C08K 7/02

(54) **LONG-FIBER-REINFORCED COLUMNAR BODY COMPRISING LONG-FIBER-REINFORCED CRYSTALLINE PROPYLENE RESIN COMPOSITION AND PROPELLER-SHAPED FAN MADE THEREFROM**
MIT LANGEN FASERN VERSTÄRKTER SÄULENFÖRMIGER KÖRPER ENTHALTEND LANGFASER VERSTÄRKTE KRISTALLINE PROPYLENHARZZUSAMMENSETZUNG SOWIE DARAUS HERGESTELLTER PROPELLERFÖRMIGER LÜFTER
CORPS COLONNAIRE RENFORCE PAR DES FIBRES LONGUES COMPRENANT UNE COMPOSITION DE RESINE DE PROPYLENE CRISTALLINE RENFORCEE PAR DES FIBRES LONGUES ET VENTILATEUR A HELICES PRODUIT A L'AIDE DUDIT ELEMENT

(30) Priority: 16.06.1994 JP 15811294
(43) Date of publication of application: 05.06.1996
(73) Proprietor: CHISSO CORPORATION, Osaka-shi Osaka 530-6591 (JP)
(72) Inventor: SHIMPUKU, Takashi, Chiba 290 (JP); YOSHIMITSU, Minoru, Chiba 290 (JP); TAKEI, Hiroshi, Chiba 292 (JP)
(74) Representative: Hansen, Bernd, Dr. Dipl.-Chem.
(86) International application number: JP9501159
(87) International publication number: WO9534603

(56) References cited:
- EP-A- 0 628 596
- DE-A- 4 223 241
- FR-A- 2 409 282
- JP-A- 5 017 642
- JP-A- 61 123 642
- US-A- 4 707 505

## Description

### TECHNICAL FIELD

The present invention relates to a long fiber-reinforced resin composition capable of providing a molded article excellent in dimensional stability as well as in creep properties and breaking strength out of the mechanical and physical properties. The present invention also relates to a propeller fan which is hardly broken even when used for stirring or carrying fluids at a high rotational speed and which is almost free from rotation creep thereby to have high dimensional stability.

### BACKGROUND ART

Reinforced resin compositions and various fiber-reinforced molded articles produced therefrom, which contain short fibers having a length of shorter than 1 mm (in the molded article) as fiber reinforcements, have been conventionally known. As compared with non-reinforced molded articles, the reinforced molded articles are considerably better in various properties, particularly in heat distortion resistance, flexural strength, tensile strength, creep properties, impact resistance and dimensional stability. Also in the art of using the short fiber reinforcements, various improvements have been made to enhance such properties. For example, there can be mentioned the following prior art (1) and prior art (2).

### (1) Japanese Patent Publication No. 2294/1984 (prior art 1)

A glass fiber-reinforced polyolefin composition obtained by homogeneously mixing 40 to 80 parts by weight of crystalline polyolefin having been wholly or partially graft modified with not more than 10 % by weight of a polar vinyl monomer, 5 to 50 parts by weight of a glass fiber and 5 to 35 parts by weight of a linear amorphous elastomer (total amount: 100 parts by weight).

Although this prior art 1 is similar to the present invention in the compounding ingredient and the weight ratio therebetween, its object is "to inhibit deformation caused by warpage after molding", that is entirely different from the object of the present invention. In this prior art, a square plate formed by injection molding was merely evaluated as a test piece, and as a matter of course no rotation test was carried out. Therefore, the rotation breaking strength and the degree of rotation creep are not mentioned.

### (2) Japanese Patent Publication No. 35738/1993 (prior art 2)

A reinforced polypropylene composition improved in abrasion resistance, which comprises a specific amount of crystalline propylene homopolymer having been graft modified with an unsaturated polar vinyl monomer or a mixture of said propylene homopolymer and unmodified crystalline propylene homopolymer, a specific amount of surface-treated reinforced fibers having a specific mean diameter, and a specific amount of an ethylene-propylene rubber having been graft modified with an unsaturated carboxylic acid or a mixture of said rubber and an unmodified ethylene-propylene rubber.

This prior art 2 was intended to improve abrasion resistance of the molded article. In this prior art, therefore, a circular plate was formed by injection molding, and the plate was used as a test piece to merely measure the Taber abrasion. That is, any blade rotator (object of the present invention) was not produced, and moreover search of rotation breaking limit or measurement of rotation creep were not carried out at all.

### (3) Japanese Patent Laid-Open Publication No. 298553/1992 (prior art 3)

A glass fiber-reinforced polyolefin resin composition obtained by adding a specific amount of modified polyolefin to a base which comprises (a) a polypropylene resin having a melt index of not less than 5 g/10 min, in an amount of 45 to 85 % by weight, (b) a low-density polyethylene having a density of 0.89 to 0.93 g/cm³, a melt index of not less than 5 g/10 min and a MI ratio represented by the following formula of 0.5 to 5, in an amount of 5 to 25 % by weight, and (c) a glass fiber having a fiber diameter and a mean fiber length in the molded article of 1 to 6 mm, in a specific amount.

This prior art 3 appears to regard addition of the ethylene-propylene copolymer elastomer as harmful. That is, a composition containing "EPR" in an amount of "10 % by weight" is described in Comparative Example 2. Moreover, formation of a high-speed rotating machine such as a propeller fan from the composition, high rotation breaking strength of the molding article and occurrence of low creep even at a high rotational speed are not mentioned at all.

US-A-4 707 505 discloses a short fiber-reinforced pellet which is made by melt kneading a graft-modified propylene/ ethylene block copolymer, glass fibers and ethylene/propylene copolymer rubber. The short fiber-reinforced pellet is distinctly different from the long-fiber reinforced columnar product in the preparing process, and the arrangement and length of the fiber reinforcement. When such a pellet as disclosed in US-A-4 707 505 is used for the injection molding of a propeller fan, the resultant propeller fan contains too short fibers and, therefore, is inferior in the resistance to the rotational creep and in rotation breaking strength.

In those publications, as described above, load occurred by the rotation of a molded article and creep of the molded article caused by the load are not mentioned at all. In the rotating members such as propeller fans produced from these conventional short fiber-reinforced olefin resin compositions, however, there are such a problem that creep takes place when the fans are rotated especially at a high speed and in an extreme case the fans are broken and do not fulfill the aimed function.

### DISCLOSURE OF THE INVENTION

The present inventors have accomplished, as means to solve the above-mentioned problem, a long fiber reinforced columnar product which is able to form rotating members free from creep and breaking caused by application of load in the rotational direction by means of a newly developed process for producing the long fiber-reinforced columnar product containing long fibers with initial fiber length in a resin matrix and a proper molding process using the long fiber-reinforced columnar product, such as injection molding. The present inventors have also invented a propeller fan on which particularly severe requirements are imposed among various rotating members. The present invention includes the following "basic conception of columnar product", "improved conceptions 1 to 9 of columnar product", and "basic conception of molded article".

### (Basic conception of columnar product)

A long fiber-reinforced columnar product (D) comprising a modified propylene crystalline resin (A) having been modified with either an organosilane compound, an unsaturated carboxylic acid or its acid anhydride, 10 to 60 % by weight (based on the composition) of a long fiber reinforcement (B) having a mean fiber length of 3 to 30 mm and a mean diameter of 3 to 21 µm and 3 to 20 % by weight (based on the composition) of an elastomer (C), said long fiber reinforcement (B) being arranged in the major axis direction of the long fiber-reinforced columnar product (D) having a length substantially equal to the mean fiber length of the long fiber reinforcement (B).

### (Improved conception 1 of columnar product)

The long fiber-reinforced columnar product (D) according to the above-mentioned "basic conception of columnar product", wherein the mean fiber length of the long fiber reinforcement (B) is in the range of 5 to 25 mm.

### (Improved conception 2 of columnar product)

The long fiber-reinforced columnar product (D) according to the above-mentioned "basic conception of columnar product" and "improved conception 1 of columnar product", wherein the long fiber reinforcement (B) is an inorganic long fiber.

### (Improved conception 3 of columnar product)

The long fiber-reinforced columnar product (D) according to the above-mentioned "basic conception of columnar product", "improved conception 1 of columnar product" and "improved conception 2 of columnar product", wherein the long fiber reinforcement (B) is a glass long fiber.

### (Improved conception 4 of columnar product)

The long fiber-reinforced columnar product (D) according to the above-mentioned "basic conception of columnar product" and "improved conception 1 of columnar product" to "improved conception 3 of columnar product", wherein the long fiber reinforcement (B) is an organic fiber.

### (Improved conception 5 of columnar product)

The long fiber-reinforced columnar product (D) according to the above-mentioned "basic conception of columnar product" and "improved conception 1 of columnar product" to "improved conception 4 of columnar product", wherein the organosilane compound serving as a modifier is at least one compound selected from aminosilane, epoxysilane, vinylsilane and methacryloxysilane.

### (Improved conception 6 of columnar product)

The long fiber-reinforced columnar product (D) according to the above-mentioned "basic conception of columnar product" and "improved conception 1 of columnar product" to "improved conception 5 of columnar product", wherein the unsaturated carboxylic acid or its acid anhydride serving as a modifier is maleic acid or maleic anhydride.

### (Improved conception 7 of columnar product)

The long fiber-reinforced columnar product (D) according to the above-mentioned "basic conception of columnar product", and "improved conception 1 of columnar product" to "improved conception 6 of columnar product", wherein the propylene crystalline resin serving as a base of the modified propylene crystalline resin (A) is a propylene-ethylene crystalline copolymer.

### (Improved conception 8 of columnar product)

The long fiber-reinforced columnar product (D) according to the above-mentioned "basic conception of columnar product" and "improved conception 1 of columnar product" to "improved conception 7 of columnar product", wherein the elastomer (C) is at least one olefin elastomer selected from an ethylene-propylene copolymer elastomer and an ethylene-propylene-nonconjugated diene copolymer elastomer.

### (Improved conception 9 of columnar product)

The long fiber-reinforced columnar product (D) according to the above-mentioned "basic conception of columnar product" and "improved conception 1 of columnar product" to "improved conception 8 the columnar product", wherein the nonconjugated diene in the elastomer (C) is at least one nonconjugated diene selected from 5-ethylidene-2-norbornene, 1,4-hexadiene and dicyclopentadiene.

### (Basic conception of molded article]

A propeller fan produced by injection molding of a long fiber-reinforced columnar product (D) comprising:
a modified propylene crystalline resin (A) comprising a modified propylene crystalline polymer having been modified with either an organosilane compound, an unsaturated carboxylic acid or its acid anhydride, and propylene-ethylene crystalline copolymer;
10 to 60 % by weight (based on the composition) of a glass long fiber reinforcement (B) having a mean fiber length of 3 to 30 mm and a mean diameter of 3 to 21 µm, which is dispersed in the component (A); and
3 to 20 % by weight (based on the composition) of at least one olefin elastomer (C) selected from an ethylene-propylene copolymer elastomer and an ethylene-propylene-nonconjugated diene copolymer elastomer, which is dispersed in the component (A),
the long fiber reinforcement (B) being arranged substantially in the major axis direction of the long fiber-reinforced columnar product (D) and having a length substantially equal to the length of the long fiber-reinforced columnar product (D).

### BRIEF DESCRIPTION OF THE DRAWINGS

Fig. 1A is a schematic plan view of a preferred embodiment of a propeller fan according to the present invention.

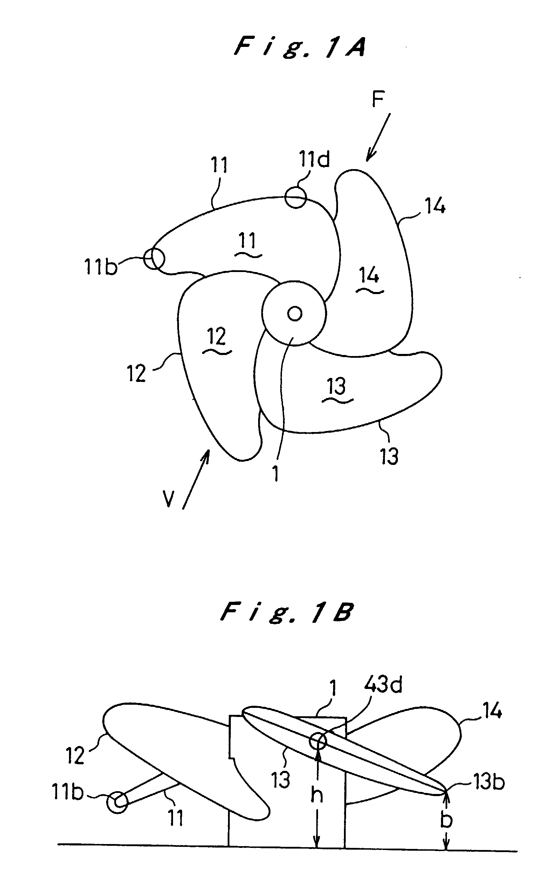

Fig. 1B is a schematic side view of the embodiment shown in Fig. 1A.

### BEST MODE FOR CARRYING OUT THE INVENTION

The long fiber-reinforced columnar product (D) according to the invention comprises a specific modified propylene crystalline resin (A), a long fiber reinforcement (B) and an elastomer (C). First, the components (A) to (C) are described in detail hereinafter.

### (Modified propylene crystalline resin (A))

The modified propylene crystalline resin (A) contained in the reinforced columnar product of the invention is graft modified crystalline polypropylene obtained by graft modifying crystalline polypropylene (base) with either an organosilane compound, an unsaturated carboxylic acid or its acid anhydride (modifier), or a composition (mixture) consisting of the graft modified crystalline polypropylene and unmodified crystalline polypropylene. In the modified propylene crystalline resin (A), a ratio of the modified crystalline polypropylene to the unmodified crystalline polypropylene (modified crystalline polypropylene/unmodified crystalline polypropylene) is in the range of 0.5/99.5 to 100/0 (weight/weight), preferably 5/95 to 80/20 (weight/weight).

The crystalline polypropylene as a base may be a propylene crystalline homopolymer or a crystalline copolymer of propylene and one or more other α-olefins, or it may be a composition consisting of a propylene crystalline homopolymer and a crystalline copolymer of propylene and one or more other α-olefins.

The organosilane compound for forming the modified propylene crystalline resin (A) in the invention is at least one compound selected from aminosilane, epoxysilane, vinylsilane and methacryloxysilane.

The unsaturated carboxylic acid for forming the modified propylene crystalline resin (A) in the invention is at least one acid selected from acrylic acid, methacrylic acid, maleic acid, itaconic acid, tetrahydrophthalic acid and norbornenedicarboxylic acid. The acid anhydride of the unsaturated carboxylic acid is at least one anhydride selected from maleic anhydride, itaconic anhydride, tetrahydrophthalic anhydride and norbornenedicarboxylic anhydride. Of these, most preferred is maleic anhydride from the viewpoint of practical performance. Derivatives of these acids are also employable.

For the ordinary purpose, it is sufficient that the amount of the graft component contained in the modified propylene crystalline resin (A) in the long fiber-reinforced composition is in the range of usually 0.01 to 1 % by weight, preferably 0.05 to 0.5 % by weight, based on the weight of the base resin. When a combination of the modified resin and the unmodified resin is used as the component (A), the amount of the modifier contained as the graft component in the modified resin should be within the above-defined range based on the combination system.

### (Long fiber reinforcement (B))

As for the long fiber reinforcement (B) for constituting the long fiber-reinforced columnar product (D) of the invention, the mean fiber length is in the range of 3 to 30 mm, preferably 5 to 25 mm, and the mean diameter of its single fiber is in the range of 3 to 21 µm, preferably 9 to 21 µm. The reinforcement is usually provided in the form of a bundle of about 500 to 4,000 single fibers. This bundle is generally referred to as "roving" or "end". The long fiber reinforcement (B) in the form of two or more rovings doubled is also employable.

In the present invention, the long fiber reinforcement (B) is required to be arranged almost in parallel with the major axis of the columnar product (D), and the mean length of the reinforcement is required to be almost equal to the length of the columnar product. Such long fiber reinforcement (B) can be obtained by processing an endless (continuous) fiber material (fiber bundle) into columnar shape by the process described later.

Examples of the endless fibers satisfying the above preconditions include artificial fibers such as glass fiber, carbon fiber, synthetic resin fiber and metallic fiber. Of these, the glass fiber is a fiber reinforcement most widely spread in view of its properties and cost. The glass fiber has such drawbacks that it is relatively heavy (disadvantageous in the specific strength) and easily broken and it is weak to alkaline materials. As compared with other fibers, the carbon fiber is exceptionally good particularly in the specific strength. For the uses where the specific strength is regarded as more important than the cost, there is nothing better than the carbon fiber. The merits of the carbon fiber are fully exhibited when it is used for aircraft, high-speed vehicles and high-speed rotating machines.

The present invention is described with reference to the glass fiber that is most useful for ordinary uses among the above fiber reinforcements. The material of the glass fiber typically used as the long fiber reinforcement (B) for constituting the long fiber-reinforced columnar product (D) of the invention is generally a hard glass (potassium glass commonly called "E glass").

### (Elastomer (C))

The elastomer (C) for constituting the long fiber-reinforced columnar product (D) of the present invention is generally referred to as "rubber-like material" in many cases, from such viewpoint that it is a lowly crystalline or amorphous soft material. The elastomer (C) in the long fiber-reinforced columnar product (D) of the present invention needs to have compatibility with the crystalline propylene resin base or have affinity of such degree that no interfacial separation between the elastomer and the resin is produced though the elastomer is present as a discontinuous phase in the resin.

For satisfying the above requests, an olefin elastomer (rubber) is more suitable than a diene rubber. However, the elastomer is required to be in the semi-crosslinked (partially crosslinked) state or uncrosslinked state before it is added. If the elastomer is in the perfectly crosslinked (perfectly vulcanized) state, it often has unsatisfactory affinity for the olefin polymer, that is, interfacial separation is easily produced.

The olefin elastomer is generally a lowly crystalline or amorphous elastic substance formed by copolymerization of ethylene and one or more α-olefins (particularly propylene and/or 1-butene), or it may be a copolymer of three or more monomers formed by copolymerization of the above monomers and a small amount of nonconjugated diene compound as a third component.

Examples of such olefin elastomers include an ethylene-propylene copolymer elastomer (EPM), an ethylene-propylene-nonconjugated diene copolymer elastomer (EPDM), an ethylene-1-butene copolymer elastomer (EBM), an ethylene-1-butene-nonconjugated diene copolymer elastomer (EBDM) and an ethylene-propylene-1-butene-nonconjugated diene copolymer elastomer (EPBDM). Generally used as the nonconjugated diene compound for preparing the elastomers are 5-ethylidene-2-norbornene (ENB) and 1,4-hexadiene. Dicyclopentadiene (DCPD) is also employable.

### (Long fiber-reinforced composition (D))

The long fiber-reinforced composition for forming the long fiber-reinforced columnar product (D) of the invention is a composition wherein the long fiber reinforcement (B) and the elastomer (C) are dispersed in the modified propylene crystalline resin (A). In the composition, the long fiber reinforcement (B) is contained in an amount of 10 to 60 % by weight, preferably 15 to 60 % by weight, more preferably 20 to 50 % by weight, based on the composition, and the elastomer (C) is contained in an amount of 3 to 20 % by weight, preferably 5 to 15 % by weight, based on the composition.

In order to favorably form the long fiber-reinforced columnar product (D) of the present invention, the reinforcing fibers (B), which are arranged almost in parallel with the major axis of the resulting columnar product and have almost the same length as that of the columnar product, must be uniformly dispersed in the resin component. A useful molding process to realize such state is, for example, the following continuous loosening (opening) impregnation process (i.e., pultrusion process) in which the loosened (opened) long fiber bundle can be uniformly impregnated with the resin component.

In the pultrusion process, a prescribed amount of a molten mixture of the modified propylene crystalline resin (A) and the elastomer (C) is extruded from an extruder and introduced into an loosening (opening) impregnation bath (another name: pultrusion apparatus). To the loosening impregnation bath, a long fiber roving is separately fed from the original long fiber roving. In this loosening impregnation bath, plural loosening (opening) pins, each major axis of which meets almost at a right angle to the running direction of the molten resin or the long fiber bundle, are arranged along the running direction. The opening pins are placed apart from each other and are arranged on a zigzag course when seen from the axis direction, and they are kept to be immersed in the molten resin.

On the other hand, the long fiber roving separately fed is contacted with the first opening pin to change its running direction, and is then contacted with the second opening pin to further change its running direction. The changes of the running directions are repeated, and, thus, the long fiber roving is allowed to meander through the pins while the roving is gradually loosened, whereby the fibers are impregnated with the molten resin. As a result, endless (continuous) resin strands reinforced with uniformly loosened endless long fibers (reinforced resin strands) are extruded.

After cooling, the endless reinforced resin strands are cut into a prescribed length, thereby to obtain a long fiber-reinforced columnar product (D) in which the long fiber reinforcement (B) having almost the same length as the length of the columnar product are arranged almost in parallel with the major axis of the columnar product.

### (Propeller fan (F))

The propeller fan according to the present invention is manufactured by injection molding the above-described long fiber-reinforced columnar product (D).

For example, a propeller fan (F) shown in Figs. 1A and 1B can be prepared by a process comprising the steps of feeding the long fiber-reinforced product (D) to a low-compression type injection molding machine having L/D (ratio of the whole length (L) of the screw to the diameter (D) of the screw) of 20 and a compression ratio of 1.8, and then injecting the resulting molten resin into a mold at a properly determined temperature, e.g., about 250 °C. The injection molding is preferably carried out under the conditions of L/D of 8 to 25 and a compression ratio of 1.5 to 2.5.

The four-blade propeller fan (F) shown in Fig. 1A is a fan of left-handed rotation in the figure. Blades 11, 12, 13 and 14 radially extends from the circumference of a center shaft 1. Each blade is in the form of a bean, and is designed to have the smallest width at the position (not shown) where the blade is connected with the center shaft 1. Each of the blades 11 to 14 is nearly spindle-shaped in its cross section and is in the form of a thin edge in its peripheral portion. The blade 11 has its smallest thickness portion llb at the tip of the blade in the rotational direction, and has its largest thickness portion lld at the region contains the radius line of the blade 11 meeting at a right angle to the tangent line of the periphery.

By the use of the long fiber reinforcement (B) according to the present invention, the propeller fan (F) of such a shape as above can be effectively prevented from creep caused by application of load under rotation or rotation breaking.

The creep or the rotation breaking of the propeller fan (F) of this embodiment can be measured by checking the portions 11b and 11d. As a matter of course, the same applies to other blades 12, 13 and 14.

Fig. 1B is a side view of the propeller fan (F) of the present invention taken from the direction crossing at a right angle to the rotating shaft, particularly from the direction indicated by arrow V in Fig. 1A. For evaluating the rotation creep of the propeller fan (F), the length h and the length b in Fig. 1B are practically measured before and after the rotation test. The length h is a distance between the portion 43d (corresponding to lld of the blade 11) and the horizontal plane that is in contact with the bottom of the center shaft 1 (the words, top, bottom, right, left, etc. are used for convenience sake in order to show the position relationship in the figures). The length b is a distance between the portion 13b (corresponding to 11b of the blade 11) and the above-mentioned horizontal plane. Then, the values for the length h or the length b obtained before and after the rotation test are compared with each other.

The rotation creep is most clearly observed at the portion 13b, and therefore it seems that the measurement of a difference of the length b between before and after the rotation test is enough and the measurement of a difference of the length h is unnecessary. The length h is basically unchanged, but when it is changed, the difference of the length h between before and after the rotation test is used to correct the length b.

### EXAMPLE

The present invention will be further described with reference to the following examples, if effective, with reference to the following Comparative Examples, but it should be construed that the invention is in no way limited to those examples.

The degree of rotation creep and the strength were measured by the following test methods.

### (1) Rotation breaking strength

A four-blade propeller fan (diameter: 450 mm, minimum value of blade thickness: 0.5 mm, maximum value of blade thickness: 4.0 mm) shown in Fig. 1 was rotated. The number of rotation at which the fan (blade) was broken was taken as "rotation breaking strength".

### (2) Degree of rotation creep

The height of the blade of the propeller fan shown in Figs. 1A and 1B was measured before and after the propeller fan was rotated at 1,000 rpm for 1,000 hours in a constant temperature bath at 65 °C. The difference of the height between before and after the rotation was taken as "degree of rotation creep".

### (3) Unmodified crystalline polypropylene

Propylene-ethylene copolymer type; overall amount of ethylene component (total amount of ethylene): 9.0 % by weight, crystalline melting point (Tm): 160 °C, MFR (230 °C, 2.16 kgf) : 2.6 g/10 min

### (4) Ethylene-propylene amorphous copolymer (elastomer)

Amount of ethylene component: 74 % by weight, MI (190 °C, 2.16 kgf): 3.2 g/10 min, Mooney viscosity [ML₁₊₄(100°C)]: 24

### (5) MFR

MFR was measured in accordance with JIS K6758.

### (6) Crystalline melting point (Tm)

A temperature, at which a peak appears on an endothermic curve obtained by observation using a differential scanning calorimeter (DSC), while heating a test specimen at a rate of 20 °C/min, was regarded as the crystalline melting point. When two or more peaks were observed, a peak having the largest area was used to determine the crystalline melting point.

### Examples 1 - 6

In a Henschel mixer (trade name), 99.2 % by weight of an unmodified polypropylene powder, 0.5 % by weight of maleic anhydride (unsaturated acid derivative, serving as a modifier), 0.1 % by weight of 1,3-bis(t-butylperoxyisopropyl)benzene (organic peroxide) and 0.1 % by weight of calcium stearate (serving as a lubricant) were mixed with each other to prepare a resin mixture 1. The resin mixture was fed to an extruder through its feed opening, then melt kneaded at 200 °C and extruded into strands, and cut them to give pellets. The modified polypropylene obtained had MFR (230 °C, 2.16 kgf) of 130 g/10 min and a graft modifier content of 0.3 % by weight.

The resin mixture 1 and an ethylene-propylene copolymer elastomer (EPM) were mixed in a Henschel mixer (trade name) to obtain a resin/elastomer mixture (resin mixture 2). The mixture was fed to a vacuum vented extruder through its feed opening and melt kneaded with vacuumizing. The resulting molten resin mixture was continuously fed into a loosening (opening) impregnation die (aforesaid pultrusion apparatus) provided on the downstream side end of a barrel of the extruder.

Separately, a glass fiber roving as an original roving was fed to the loosening impregnation die. The roving was slid along the peripheries of plural loosening pins and turned its running direction so as to allow the roving to zigzag run, whereby the roving was loosened so that the fibers were sufficiently impregnated with the molten resin mixture 2. The composite thus loosened and impregnated was extruded into strands. The strands were cooled with water in a cooling bath to lower the temperature to room temperature, and they were cut by means of a strand cutter to give a reinforced columnar product (reinforced pellet) having a mean length of 10 mm. The glass fiber roving used herein was a roving for polypropylene having a single fiber diameter of 17 µm, a bundle of 4,000 single fibers and tex yarn count of 2,310. The composition and the properties of the reinforced columnar product are set forth in Table 1.

The reinforced columnar product was fed to an injection molding machine (L/D of screw: 20, compression ratio: 1.8) through its feed opening for starting material and melted at 250 °C. Then, the molten resin was injected into a mold and molded into a four-blade screw having a shape of Fig. 1 (diameter: 450 mm, minimum value of blade thickness: 0.5 mm, maximum value of blade thickness: 4.0 mm). The properties of the propeller fan thus obtained are also set forth in Table 1.

### Comparative Examples 1 and 2

In a Henschel mixer (trade name), 99.2 % by weight of an unmodified polypropylene powder, 0.5 % by weight of maleic anhydride (unsaturated acid derivative, serving as a modifier), 0.1 % by weight of 1,3-bis(t-butylperoxyisopropyl)benzene (organic peroxide) and 0.1 % by weight of calcium stearate (serving as a lubricant) were mixed with each other to prepare a resin mixture 1. The resin mixture was fed to an extruder through its feed opening, then melt kneaded at 200 °C and extruded into strands, and cut them to give pellets. The modified polypropylene obtained had MFR (230 °C, 2.16 kgf) of 130 g/10 min and a graft modifier content of 0.3 % by weight.

Then, a reinforced columnar product (reinforced pellet) was prepared in the same manner as in Example 1, except that only the modified polypropylene was used in place of the resin/elastomer mixture. The composition and the properties of the reinforced columnar product and the properties of the propeller fan produced therefrom are set forth in Table 1.

### Comparative Example 3

In a Henschel mixer (trade name), 99.2 % by weight of an unmodified polypropylene powder, 0.5 % by weight of maleic anhydride (unsaturated acid derivative, serving as a modifier), 0.1 % by weight of 1,3-bis(t-butylperoxyisopropyl)benzene (organic peroxide) and 0.1 % by weight of calcium stearate (serving as a lubricant) were mixed with each other to prepare a resin mixture 1. The resin mixture was fed to an extruder through its feed opening, then melt kneaded at 200 °C and extruded into strands, and cut them to give pellets. The modified polypropylene obtained had MFR (230 °C, 2.16 kgf) of 130 g/10 min and a graft modifier content of 0.3 % by weight.

The resin mixture 1 and an ethylene-propylene copolymer elastomer were mixed in a Henschel mixer to obtain a resin/elastomer mixture (resin mixture 2). The mixture was fed in a prescribed amount to a vacuum vented extruder through the first feed opening, while glass short fibers (chopped strands, mean fiber diameter: 13 µm, mean fiber length: 3.0 mm) were fed in a prescribed amount through the second feed opening, followed by melt kneading with vacuumizing. Then, the reinforced composite was extruded into strands.

The strands were pelletized by cutting to give pellets having a mean length of 3 mm. The modified polypropylene obtained had MFR (230 °C, 2.16 kgf) of 130 g/10 min and a graft modifier content of 0.3 % by weight, and these values were the same as those of the above examples.

The composition and the properties of the granules and the properties of the propeller fan produced therefrom are set forth in Table 1.

### Comparative Examples 4 - 7

One or more conditions among those in Examples 1 to 6 were set outside of the scope of the claims, and the experiment was carried out. The results are set forth in Table 1.

### View on the results of the comparative examples

### (Comparative Examples 1 and 2)

These are examples in which a crystalline propylene-ethylene copolymer not containing EPM and a crystalline propylene homopolymer not containing EPM were each used as a base, and they were each reinforced with a long fiber reinforcement to prepare long fiber-reinforced polypropylene. The propeller fan formed from the long fiber-reinforced polypropylene was still poor in the rotation breaking strength and the rotation creep properties (degree of creep). The cause resides in lack of toughness.

### (Comparative Example 3)

A short fiber reinforcement was used as the fiber reinforcement. Although the resin composition and the amount of the fiber reinforcement were within the range of the invention examples, the propeller fan formed from a composite of this formulation was still poor in the rotation breaking strength and the rotation creep properties (degree of creep). The cause resides in lack of rigidity and lack of toughness.

### (Comparative Example 4)

The propeller fan formed from a composite of the formulation having an EPM content of 2 % by weight was lowered in the rotation breaking strength. The cause resides in lack of toughness.

### (Comparative Example 5)

The propeller fan formed from a composite of the formulation having an EPM content of 25 % by weight was lowered in the rotation creep properties (degree of creep). The cause resides in lack of rigidity.

### (Comparative Example 6)

The propeller fan formed from a composite of the formulation having a long fiber reinforcement content of 70 % by weight was lowered in the rotation breaking strength. The cause resides in increase of folding of glass fibers owing to the mutual inhibitory effect of the fibers in the molding process.

### (Comparative Example 7)

The propeller fan formed from a composite of the formulation having a long fiber reinforcement content of 5 % by weight was lowered in the rotation creep properties (degree of creep). The cause resides in lack of rigidity.

**Table 1**

| Content of experiment | | Formulation | | | | | Rotational properties | |
|---|---|---|---|---|---|---|---|---|
| Experiment No. | | Propylene crystalline resin | | Amount of EPM (wt%) | Glass fiber | | Breaking strength (rpm) | Degree of creep (mm) |
| | | Type of polymerization | Amount (wt%) | | Amount (wt%) | Mean length (mm) | | |
| Ex. | 1 | Copolymerization | 70 | 10 | 20 | 3.6 | 3300 | 3.2 |
| Ex. | 2 | Homopolymerization | 70 | 10 | 20 | 3.7 | 2900 | 2.0 |
| Comp. Ex. | 1 | Copolymerization | 80 | - | 20 | 4.1 | 2200 | 6.0 |
| Comp. Ex. | 2 | Homopolymerization | 80 | - | 20 | 4.2 | 2400 | 2.0 |
| Comp. Ex. | 3 | Copolymerization | 70 | 10 | 20 | 0.4 | 1200 | 18.0 |
| Ex. | 3 | Copolymerization | 75 | 5 | 20 | 3.9 | 2700 | 2.0 |
| Ex. | 4 | Copolymerization | 60 | 20 | 20 | 3.2 | 3600 | 5.0 |
| Comp. Ex. | 4 | Copolymerization | 78 | 2 | 20 | 4.0 | 2200 | 2.0 |
| Comp. Ex. | 5 | Copolymerization | 65 | 25 | 20 | 2.8 | 3200 | 12.0 |
| Ex. | 5 | Copolymerization | 30 | 10 | 60 | 2.4 | 3900 | 0.5 |
| Ex. | 6 | Copolymerization | 80 | 10 | 10 | 4.2 | 2700 | 5.0 |
| Comp. Ex. | 6 | Copolymerization | 20 | 10 | 70 | 1.8 | 2700 | 0.5 |
| Comp. Ex. | 7 | Copolymerization | 85 | 10 | 5 | 4.6 | 2400 | 14.0 |

### EFFECT OF THE INVENTION

The long fiber-reinforced columnar product (D) according to the present invention comprises a modified propylene crystalline resin (A) having been modified with either an organosilane compound, an unsaturated carboxylic acid or its acid anhydride, 10 to 60 % by weight (based on the composition) of a long fiber reinforcement (B) having a mean fiber length of 3 to 30 mm and a mean diameter of 3 to 21 µm and 3 to 20 % by weight of an elastomer (C). Further, the mean fiber length of the long fiber reinforcement (B) is substantially the same as the length of the long fiber-reinforced columnar product (D), and the long fiber reinforcement (B) is arranged in the major axis direction of the columnar product (D). By injection molding with using the long fiber-reinforced columnar product (D), a propeller fan which is not broken and has low rotation creep even at a high rotational speed can be provided.

## Claims

1. A long fiber-reinforced columnar product (D) comprising
a modified propylene crystalline resin (A) having been modified with either an organosilane compound, an unsaturated carboxylic acid or its acid anhydride,
10 to 60 % by weight (based on the composition) of a long fiber reinforcement (B) having a mean fiber length of 3 to 30 mm and a mean diameter of 3 to 21 µm, and
3 to 20 % by weight (based on the composition) of an elastomer (C) having compatibility or an affinity of such degree with the resin (A) that no interfacial separation between the elastomer (C) and the resin (A) is produced though the elastomer (C) is present as a discontinuous phase in the resin (A),
said long fiber reinforcement (B) being arranged in the major axis direction of the long fiber-reinforced columnar product (D) having a length substantially equal to the mean fiber length of the long fiber reinforcement (B).

2. The long fiber-reinforced columnar product (D) as claimed in claim 1, wherein the mean fiber length of the long fiber reinforcement (B) is in the range of 5 to 25 mm.

3. The long fiber-reinforced columnar product (D) as claimed in claim 1 or claim 2, wherein the long fiber reinforcement (B) is an inorganic long fiber.

4. The long fiber-reinforced columnar product (D) as claimed in any one of claims 1 to 3, wherein the long fiber reinforcement (B) is a glass long fiber.

5. The long fiber-reinforced columnar product (D) as claimed in any one of claims 1 to 4, wherein the long fiber reinforcement (B) is an organic fiber.

6. The long fiber-reinforced columnar product (D) as claimed in any one of claims 1 to 5, wherein the organosilane compound serving as a modifier is at least one compound selected from aminosilane, epoxysilane, vinylsilane and methacryloxysilane.

7. The long fiber-reinforced columnar product (D) as claimed in any one of claims 1 to 6, wherein the unsaturated carboxylic acid or its acid anhydride serving as a modifier is maleic acid or maleic anhydride.

8. The long fiber-reinforced columnar product (D) as claimed in any one of claims 1 to 7, wherein the propylene crystalline resin serving as a base of the modified propylene crystalline resin (A) is a propylene-ethylene crystalline copolymer.

9. The long fiber-reinforced columnar product (D) as claimed in any one of claims 1 to 8, wherein the elastomer (C) is at least one olefin elastomer selected from an ethylene-propylene copolymer elastomer and an ethylene-propylene-nonconjugated diene copolymer elastomer.

10. The long fiber-reinforced columnar product (D) as claimed in any one of claims 1 to 9, wherein the nonconjugated diene in the elastomer (C) is at least one nonconjugated diene selected from 5-ethylidene-2-norbornene, 1,4-hexadiene and dicyclopentadiene.

11. A propeller fan produced by injection molding of a long fiber-reinforced columnar product (D) comprising:
a modified propylene crystalline resin (A) comprising a modified propylene crystalline polymer having been modified with either an organosilane compound, an unsaturated carboxylic acid or its acid anhydride, and propylene-ethylene crystalline copolymer;
10 to 60 % by weight (based on the composition) of a glass long fiber reinforcement (B) dispersed in the component (A) and having a mean fiber length of 3 to 30 mm and a mean diameter of 3 to 21 µm; and
3 to 20 % by weight (based on the composition) of at least one olefin elastomer (C) selected from an ethylene-propylene copolymer elastomer and an ethylene-propylene-nonconjugated diene copolymer elastomer, which is dispersed in the component (A) and has compatibility or an affinity of such degree with the component (A) that no interfacial separation between the elastomer (C) and the component (A) is produced though the elastomer (C) is present as a discontinuous phase in the component (A),
said long fiber reinforcement (B) being arranged substantially in the major axis direction of the long fiber-reinforced columnar product (D) and having a length substantially equal to the length of the long fiber-reinforced columnar product (D).

## Patentansprüche

1. Durch lange Fasern verstärktes, säulenförmiges Produkt (D), umfassend
- ein modifiziertes kristallines Propylenharz (A), das entweder mit einer Organosilanverbindung, einer ungesättigten Carbonsäure oder ihrem Säureanhydrid modifiziert wurde;
- 10 bis 60 Gew.-% (bezogen auf die Zusammensetzung) einer Verstärkung aus langen Fasern (B), die eine mittlere Faserlänge von 3 bis 30 mm und einen mittleren Durchmesser von 3 bis 21 µm haben, und
- 3 bis 20 Gew.-% (bezogen auf die Zusammensetzung) eines Elastomers (C), das mit dem Harz (A) Kompatibilität oder Affinität zu demselben in einem Grad hat, daß keine Grenzflächentrennung zwischen dem Elastomer (C) und dem Harz (A) produziert wird, obgleich das Elastomer als diskontinuierliche Phase im Harz (A) vorliegt;
wobei die lange Faserverstärkung (B) in Richtung der Hauptachse des durch lange Fasern verstärkten, säulenförmigen Produktes, das eine Länge hat, die im wesentlichen gleich groß wie die mittlere Faserlänge der langen Faserverstärkung (B) ist, angeordnet ist.

2. Durch lange Fasern verstärktes, säulenförmiges Produkt (D) nach Anspruch 1, wobei die mittlere Faserlänge der langen Faserverstärkung (B) im Bereich von 5 bis 25 mm liegt.

3. Durch lange Fasern verstärktes, säulenförmiges Produkt (D) nach Anspruch 1 oder 2, wobei die lange
Faserverstärkung (B) eine lange anorganische Faser ist.

4. Durch lange Fasern verstärktes, säulenförmiges Produkt (D) nach einem der Ansprüche 1 bis 3, wobei die lange Faserverstärkung (B) eine lange Glasfaser ist.

5. Durch lange Fasern verstärktes, säulenförmiges Produkt (D) nach einem der Ansprüche 1 bis 4, wobei die lange Faserverstärkung (B) eine organische Faser ist.

6. Durch lange Fasern verstärktes, säulenförmiges Produkt (D) nach einem der Ansprüche 1 bis 5, wobei die als Modifikationsmittel dienende Organosilanverbindung mindestens eine Verbindung, ausgewählt aus Aminosilan, Epoxysilan, Vinylsilan und Methacryloxysilan, ist.

7. Durch lange Fasern verstärktes, säulenförmiges Produkt (D) nach einem der Ansprüche 1 bis 6, wobei die ungesättigte Carbonsäure oder ihr Säureanhydrid, die (das) als Modifikationsmittel dient, Maleinsäure oder Maleinsäureanhydrid ist.

8. Durch lange Fasern verstärktes, säulenförmiges Produkt (D) nach einem der Ansprüche 1 bis 7, wobei das kristalline Propylenharz, das als Grundlage für das modifizierte kristalline Propylenharz (A) dient, ein kristallines Propylen-Ethylen-Copolymer ist.

9. Durch lange Fasern verstärktes, säulenförmiges Produkt (D) nach einem der Ansprüche 1 bis 8, wobei das Elastomer (C) mindestens ein Olefinelastomer, ausgewählt aus einem Ethylen-Propylen-Copolymerelastomer und einem Ethylen-Propylen-nichtkonjugiertes Dien-Copolymerelastomer, ist.

10. Durch lange Fasern verstärktes, säulenförmiges Produkt (D) nach einem der Ansprüche 1 bis 9, wobei das nichtkonjugierte Dien in dem Elastomer (C) mindestens ein nichtkonjugiertes Dien, ausgewählt aus 5-Ethyliden-2-norbornen, 1,4-Hexadien und Dicyclopentadien, ist.

11. Propellerventilator, der durch Spritzgießen eines durch lange Fasern verstärkten, säulenförmigen Produktes (D), umfassend
- ein modifiziertes kristallines Propylenharz (A), umfassend ein modifiziertes kristallines Propylenpolymer, das entweder mit einer Organosilanverbindung, einer ungesättigten Carbonsäure oder ihrem Säureanhydrid modifiziert wurde, und ein kristallines Propylen-Ethylen-Copolymer;
- 10 bis 60 Gew.-% (bezogen auf die Zusammensetzung) wenigstens einer Verstärkung aus langen Glasfasern (B), die in der Komponente (A) dispergiert sind und eine mittlere Faserlänge von 3 bis 30 mm und einen mittleren Durchmesser von 3 bis 21 µm haben, und
- 3 bis 20 Gew.-% (bezogen auf die Zusammensetzung) wenigstens eines Elastomers (C), ausgewählt aus einem Ethylen-Propylen-Copolymerelastomer und einem Ethylen-Propylen-nichtkonjugiertem Dien-Copolymerelastomer, das in der Komponente (A) dispergiert ist und das mit der Komponente (A) Kompatibilität oder Affinität zu derselben in einem Grad hat, daß keine Grenzflächentrennung zwischen dem Elastomer (C) und der Komponente (A) produziert wird, obgleich das Elastomer (C) als diskontinuierliche Phase in der Komponente (A) vorliegt;
wobei die lange Faserverstärkung (B) im wesentlichen in Richtung der Hauptachse des durch lange Fasern verstärkten, säulenförmigen Produktes (D) angeordnet ist und eine Länge hat, die im wesentlichen gleich groß wie die Länge des durch lange Fasern verstärkten, säulenförmigen Produktes (D) ist,
hergestellt wird.

## Revendications

1. Produit colonnaire (D) renforcé par des fibres longues, comportant
une résine cristalline de propylène modifié (A), qui a été modifiée par un composé d'organosilane, un acide carboxylique insaturé ou son anhydride d'acide,
de 10 à 60% en poids (par rapport à la composition) d'un renforcement en longues fibres (B) présentant une longueur moyenne de fibre de 3 à 30 mm et un diamètre moyen de 3 à 21 µm, et
de 3 à 20% en poids (par rapport à la composition) d'un élastomère (C) présentant une compatibilité ou une affinité avec la résine (A) à un degré tel qu'il ne se produit pas de séparation interfaciale entre l'élastomère (C) et la résine (A) bien que l'élastomère (C) soit présent dans la résine (A) sous la forme d'une phase discontinue,
ledit renforcement en longues fibres (B) étant agencé dans la direction de l'axe principal du produit colonnaire (D) renforcé par des fibres longues, dont la longueur est essentiellement égale à la longueur moyenne des fibres du renforcement en longues fibres (B).

2. Produit colonnaire (D) renforcé par des fibres longues, selon la revendication 1, dans lequel la longueur moyenne des fibres du renforcement en longues fibres (B) est comprise dans la plage de 5 à 25 mm.

3. Produit colonnaire (D) renforcé par des fibres longues, selon la revendication 1 ou la revendication 2, dans lequel le renforcement en longues fibres (B) est constitué de longues fibres minérales.

4. Produit colonnaire (D) renforcé par des fibres longues, selon l'une quelconque des revendications 1 à 3, dans lequel le renforcement (B) en longues fibres est constitué de longues fibres de verre.

5. Produit colonnaire (D) renforcé par des fibres longues, selon l'une quelconque des revendications 1 à 4, dans lequel le renforcement (B) en longues fibres est constitué de fibres organiques.

6. Produit colonnaire (D) renforcé par des fibres longues, selon l'une quelconque des revendications 1 à 5, dans lequel le composé d'organosilane servant d'agent de modification est au moins un composé choisi parmi l'aminosilane, l'époxysilane, le vinylsilane et le méthacryloxysilane.

7. Produit colonnaire (D) renforcé par des fibres longues, selon l'une quelconque des revendications 1 à 6, dans lequel l'acide carboxylique insaturé ou son anhydride d'acide servant d'agent de modification est l'acide maléique ou l'anhydride maléique.

8. Produit colonnaire (D) renforcé par des fibres longues, selon l'une quelconque des revendications 1 à 7, dans lequel la résine cristalline de propylène servant de base à la résine cristalline de propylène modifié (A) est un copolymère cristallin de propylène-éthylène.

9. Produit colonnaire (D) renforcé par des fibres longues, selon l'une quelconque des revendications 1 à 8, dans lequel l'élastomère (C) est au moins un élastomère d'oléfine choisi parmi un élastomère de copolymère éthylène-propylène et un élastomère de copolymère éthylène-propylène-diène non conjugué.

10. Produit colonnaire (D) renforcé par des fibres longues, selon l'une quelconque des revendications 1 à 9, dans lequel le diène non conjugué dans l'élastomère (C) est au moins un diène non conjugué choisi parmi le 5-éthylidène-2-norbornène, le 1,4-hexadiène et le dicyclopentadiène.

11. Pale d'hélice produite par moulage par injection d'un produit colonnaire (D) renforcé par des fibres longues, comportant
une résine cristalline de propylène modifié (A) comportant un polymère cristallin de propylène modifié, qui a été modifié par un composé d'organosilane, un acide carboxylique insaturé ou son anhydride d'acide, et un copolymère cristallin de propylène-éthylène,
de 10 à 60% en poids (par rapport à la composition) d'un renforcement en longues fibres de verre (B) dispersées dans le composant (A) et présentant une longueur moyenne de fibre de 3 à 30 mm et un diamètre moyen de 3 à 21 µm, et
de 3 à 20% en poids (par rapport à la composition) d'au moins un élastomère d'oléfine (C) choisi parmi un élastomère de copolymère éthylène-propylène et un élastomère de copolymère éthylène-propylène-diène non conjugué qui est dispersé dans le composant (A) et qui présente une compatibilité ou une affinité avec le composant (A) à un degré tel qu'il ne se produit pas de séparation interfaciale entre l'élastomère (C) et le composant (A) bien que l'élastomère (C) soit présent dans le composant (A) sous la forme d'une phase discontinue,
ledit renforcement en longues fibres (B) étant agencé essentiellement dans la direction de l'axe principal du produit colonnaire (D) renforcé par des fibres longues, et présentant une longueur essentiellement égale à la longueur du produit colonnaire (D) renforcé par des fibres longues.
